# EUROPÄISCHE PATENTSCHRIFT

(11) **EP 4 303 433 B1**
(45) Veröffentlichungstag und Bekanntmachung des Hinweises auf die Patenterteilung: **20.11.2024**
(21) Anmeldenummer: 23181638.0
(22) Anmeldetag: 27.06.2023
(51) Int. Cl.: F03D 9/12, F03D 15/00

(54) **VORRICHTUNG UND VERFAHREN ZUM SPEICHERN VON ROTATIONSENERGIE**
DEVICE AND METHOD FOR STORING ROTATIONAL ENERGY
DISPOSITIF ET PROCÉDÉ DE STOCKAGE D'ÉNERGIE DE ROTATION

(30) Priorität: 08.07.2022 DE 102022117061
(43) Veröffentlichungstag der Anmeldung: 10.01.2024
(73) Patentinhaber: Butterwegge, Rudolf, 34414 Warburg (DE)
(72) Erfinder: Butterwegge, Rudolf, 34414 Warburg (DE)
(74) Vertreter: Walther Bayer Faber Patentanwälte PartGmbB

(56) Entgegenhaltungen:
- WO-A1-2009/142477
- WO-A2-2004/045040
- US-A1- 2019 136 835
- US-A1- 2022 010 781
- RUDDELL A.J. ET AL: "Power Converters for Flywheel Energy Storage Systems", PUBLISHABLE FINAL REPORT (NON-CONFIDENTIAL), JOULE PROJECT JOR3-CT95-0070, 18 December 1998 (1998-12-18), pages 1 - 15, XP055325407

## Beschreibung

Die vorliegende Erfindung betrifft eine Vorrichtung und ein Verfahren zum Speichern von Rotationsenergie.

Im Zuge der Bestrebungen, den Kohlendioxid-Ausstoß zu verringern, spielt die Nutzung von erneuerbaren Energien zur Bereitstellung insbesondere von elektrischer Energie eine wichtige Rolle. Die vorwiegend genutzten erneuerbaren Energien sind Sonnenenergie (auch als Solarenergie bezeichnet), Windenergie und mit gewissen Abstrichen die Wasserkraft. Die mit der Nutzung der vorgenannten Energien hat aber insbesondere den Nachteil, dass die Menge der bereitstellbaren elektrischen Energie stark schwankt. Bezüglich der Sonnenenergie und der Windenergie bezeichnet der Begriff "Dunkelflaute" einen Zustand, in welchem aufgrund von schwachem Wind und Dunkelheit nur geringe Mengen an elektrischer Energie bereitgestellt werden können. Dieser Zustand tritt vorwiegend in den Wintermonaten auf, in denen der Energiebedarf typischerweise höher ist als in den Sommermonaten, der dann von den erneuerbaren Energien nicht vollständig gedeckt werden kann.

Es treten aber auch gegenteilige Zustände auf. Bei starkem Wind und Sonnenschein wird mehr elektrische Energie erzeugt als zur Vermeidung von Überlasten des Stromnetzes eingespeist werden kann. In diesen Zuständen werden die Windenergieanlagen und Sonnenenergieanlagen gedrosselt oder ganz vom Netz genommen.

Um dieser Situation entgegenzuwirken, kann die aus der Nutzung der erneuerbaren Energien bereitgestellte elektrische Energie in sogenannten Langzeitspeichern gespeichert werden. Beispielsweise kann die Energie in Form von chemischer Energie in Wasserstoff oder Methan gespeichert werden. In der DE 20 20110 105 379 U1 wird die Speicherung von Rotationsenergie, die von einem Windrad bereitgestellt wird, mit einem Schwungrad beschrieben. Prinzipiell wäre auch die Speicherung der so erzeugten elektrischen Energie in Batterien denkbar. Allerdings ist die Speicherung der Energie, in welcher Form auch immer, bislang mit Nachteilen verbunden, die unter anderem in der geringen Effizienz und dem technischen Aufwand begründet sind. Die geringe Effizienz wird unter anderem dadurch verursacht, dass nahezu jede Energieumwandlung mit Verlusten verbunden ist.

Zum weiteren relevanten Stand der Technik wird auf die DE 11 2012 001 963 T5, die CN 1 11 509 909 A, die WO 2009/142477 A1, die US 2019/136835 A1, die WO 2004/045040 A2, die US 7 108 095 B1 und die EP 2 607 691 A1 verwiesen.

Aufgabe einer Ausführungsform der vorliegenden Erfindung betrifft eine Vorrichtung zum Speichern von Rotationsenergie, mit welcher es mit einfachen und kostengünstigen Mitteln möglich ist, eine Abhilfe für die oben genannten Nachteile zu schaffen und insbesondere eine effiziente und technisch gut umsetzbare Möglichkeit zum Speichern von Rotationsenergie bereitzustellen. Des Weiteren liegt einer Ausgestaltung der vorliegenden Erfindung die Aufgabe zugrunde, ein Verfahren zum Speichern von Rotationsenergie mit einer solchen Vorrichtung zu schaffen.

Diese Aufgabe wird mit den in den Ansprüchen 1 und 8 angegebenen Merkmalen gelöst. Vorteilhafte Ausführungsformen sind Gegenstand der Unteransprüche.

Eine Ausführungsform der Erfindung betrifft eine Vorrichtung zum Speichern von Rotationsenergie, umfassend
- einen um eine Rotationsachse drehbar gelagerten Massekörper zum Speichern von Rotationsenergie, wobei der Massekörper einen ersten Lagerungsabschnitt und einen zweiten Lagerungsabschnitt aufweist,
- eine mit dem Massekörper oder dem ersten Lagerungsabschnitt zusammenwirkende Rotationsenergiequelle zum Bereitstellen von zu speichernder Rotationsenergie,
- einen mit dem Massekörper oder zweiten Lagerungsabschnitt zusammenwirkenden Rotationsenergieverbraucher zum Abnehmen der gespeicherten Rotationsenergie,
- einen zwischen der Rotationsenergiequelle und dem ersten Lagerungsabschnitt angeordneten ersten Variator zum variablen Einstellen des Übersetzungsverhältnisses zwischen der Rotationsenergiequelle und dem Massekörper und insbesondere dem ersten Lagerungsabschnitt und
- einen zwischen dem Massekörper oder dem zweiten Lagerungsabschnitt und dem Rotationsenergieverbraucher angeordneten zweiten Variator zum variablen Einstellen des Übersetzungsverhältnisses zwischen dem Massekörper und insbesondere dem zweiten Lagerungsabschnitt und dem Rotationsenergieverbraucher.

Die wichtigsten Faktoren, welche die Menge der Rotationsenergie bestimmen, sind die Masse und die Drehzahl, mit welcher sich die Masse dreht. Für den Fall, dass die Rotationsenergiequelle Rotationsenergie bereitstellen kann, liegt diese mit einer bestimmten Drehzahl an. Mittels des ersten Variators kann die Drehzahl so gewandelt werden, dass die Drehzahl des Massekörpers erhöht wird. Das Übersetzungsverhältnis bezieht sich dabei auf die Drehzahl der Energiequelle und die des Massekörpers. Es kann vom ersten Variator je nach Betrachtungsweise auch eine Untersetzung bereitgestellt werden. Somit wird die von der Rotationsenergiequelle bereitgestellte Rotationsenergie auf den Massekörper übertragen und dort dadurch gespeichert, dass sich der Massekörper um die Rotationsachse dreht. Der Massekörper weist dabei üblicherweise eine hohe Masse auf. Aufgrund des hiermit einhergehenden Trägheitsmoments bleibt die Rotation des Massekörpers und folglich die in im gespeicherte Rotationsenergie für eine vergleichsweise lange Zeit erhalten und kann bedarfsgerecht genutzt werden. Je nach Ausgestaltung der Rotationsenergiequelle kann die von ihr bereitgestellte Rotationsenergie auch auf mehrere Massekörper übertragen werden.

Mit dem zweiten Variator kann die Drehzahl des Massekörpers so gewandelt werden, wie es für den Rotationsenergieerbraucher günstig ist. Ein Rotationsenergieverbraucher kann ein Schraubenkompressor sein, der beispielsweise in Industrieanlagen eingesetzt wird. Der Rotationsenergieverbraucher hat typischerweise einen Drehzahlbereich, in welchem er optimal betrieben werden kann. Der zweite Variator wandelt die Drehzahl des Massekörpers in eine Drehzahl um, die im optimalen Drehzahlbereich des Rotationsenergieverbrauchers liegt und gibt diese Drehzahl an den Rotationsenergieverbraucher weiter.

Infolge der Verwendung der ersten Variators und des zweiten Variators kann die zu speichernde Rotationsenergie unabhängig von der Drehzahl, mit welcher die Rotationsenergieverbraucher betrieben wird, an den Massekörper weitergeleitet werden. Die Zufuhr von Rotationsenergie zum Massekörper bewirkt eine Erhöhung der Drehzahl des Massekörpers. Der zweite Variator kann aber die Drehzahl des Massekörpers so wandeln, dass der Rotationsenergieverbraucher mit einer konstanten Drehzahl oder zumindest in einem vergleichsweise engen Drehzahlbereich optimal betrieben werden kann. Der erste Variator und der zweite Variator arbeiten dabei vorzugsweise stetig und liefern die Drehzahlen unterbrechungsfrei.

Viele Kraftwerke wie Kohlekraftwerke oder Atomkraftwerke benötigen eine Kühlung, weshalb sie an Flüssen errichtet werden, um das Wasser des Flusses als Kühlwasser verwenden zu können. Da vorliegend keine Energieträger gekühlt werden müssen, kann die vorschlagsgemäße Vorrichtung weitgehend unabhängig von örtlichen Begebenheiten installiert werden. Je nach Ausgestaltung müssen der erste Lagerungsabschnitt und/oder der zweite Lagerungsabschnitt gekühlt werden, was aber im Vergleich zu der Kühlung eines Kohlekraftwerks oder Atomkraftwerks mit einem nahezu vernachlässigenden Aufwand machbar ist.

Erfindungsgemäß sind der erste Variator und/oder der zweite Variator als eine Hydraulikmaschine ausgebildet. Die Hydraulikmaschine umfasst dabei eine Hydraulikpumpe und einen Hydraulikmotor. Die Hydraulikpumpe wird beispielsweise vom Windrad angetrieben und wandelt die Rotationsenergie des Windrads in hydraulische Energie, die im Wesentlichen vom Druck und der Volumenstrom des verwendeten Hydraulikmediums bestimmt wird, um. Der Hydraulikmotor wiederum wandelt die hydraulische Energie des Hydraulikmediums in Rotationsenergie um. Als Hydraulikmedium kann beispielsweise Wasser oder Hydrauliköl verwendet werden, welches in Hydraulikschläuchen geführt wird. Die Schläuche können relativ flexibel auch über längere Strecken geführt werden, so dass diesbezüglich kaum bauliche Vorgaben erfüllt sein müssen. Zudem ist es in dieser Ausführungsform mit vergleichsweise geringem Aufwand möglich, die von einer Rotationsenergiequelle bereitgestellte Rotationsenergie auf mehrere Massekörper zu übertragen. Die Massekörper können in einem Hydraulikkreislauf parallel geschaltet sein, wobei Proportionalventile verwendet werden können, um den Volumenstrom des verwendeten Hydraulikmediums auf die Massekörper bedarfsgerecht verteilen zu können. Denkbar wäre beispielsweise, die Rotationsenergie so lange auf einen ersten Massekörper zu übertragen, bis dieser eine bestimmte Drehzahl erreicht hat. Ist noch weitere Rotationsenergie vorhanden, wird diese auf einen weiteren Massekörper übertragen, der entweder stillsteht oder mit einer geringeren Drehzahl dreht als der erste Massekörper. Hierdurch können hohe Drehzahlen vermieden werden, weshalb die Belastung der Lagerungsabschnitte gering gehalten wird.

Nach Maßgabe einer weiteren Ausführungsform kann der Rotationsenergieverbraucher ein Generator zum Bereitstellen von elektrischer Energie sein. Die elektrische Energie ist diejenige Form von Energie, die im Alltag sehr häufig verwendet wird. Dabei wird überwiegend Wechselspannung von 230 V bei einer Frequenz von 50 Hz verwendet. Die Frequenz der Wechselspannung ändert sich aber mit der Drehzahl des verwendeten Wechselstrom-Generators. Bei einer zu starken Abweichung kann es daher zu Störungen im Stromnetz kommen. Wie erwähnt, kann aber aufgrund der Verwendung des ersten Variators und des zweiten Variators der Generator mit einer gleichbleibenden oder nahezu gleichbleibenden Drehzahl betrieben werden, so dass vom Generator ausgehende Frequenzschwankungen und damit einhergehende Störungen des Stromnetzes gering gehalten werden können.

In einer weitergebildeten Ausführungsform kann die Rotationsenergiequelle ein Wasserrad oder ein Windrad sein. Mit einem Wasserrad kann die im strömenden Wasser, beispielsweise im Wasser eines Flusses oder eines Meeres, enthaltene kinetische und/oder potenzielle Energie insbesondere in elektrische Energie umgewandelt werden. Unter einem Wasserrad kann auch eine Wasserturbine verstanden werden, die beispielsweise bei einem Gezeiten- oder Wasserkraftwerk eingesetzt wird. Mit einem Windrad kann die im Wind enthaltene kinetische Energie des Windes insbesondere in elektrische Energie gewandelt werden.

Bei einer weitergebildeten Ausführungsform kann die Rotationsenergiequelle ein Elektromotor oder ein Verbrennungsmotor sein. Der Elektromotor kann insbesondere als ein Solarmotor und der Verbrennungsmotor als ein Wasserstoffmotor ausgestaltet sein. Im Falle eines Solarmotors kann die ihn antreibende Sonnenenergie in Rotationsenergie umgewandelt und im Massekörper gespeichert werden. Ein Wasserstoffmotor kann insbesondere in chemischen Fabriken eingesetzt werden, wo Wasserstoff als Abfallprodukt anfällt. Alternativ kann anstelle des Wasserstoffmotors eine Brennstoffzelle eingesetzt werden. Der Transport des sehr reaktiven und daher schwer handhabbaren Wasserstoffs kann kurz gehalten werden oder ganz entfallen.

Eine weitergebildete Ausführungsform kann sich dadurch auszeichnen, dass die Hydraulikmaschine als eine Axialkolbenmaschine ausgebildet ist. Die Axialkolbenmaschine umfasst dabei eine Axialkolbenpumpe und einen Axialkolbenmotor. Die Axialkolbenmaschine kann als Schrägachsen- oder Schrägscheibenmaschine ausgebildet sein. Axialkolbenmaschinen zeichnen sich insbesondere dadurch aus, dass sich der Volumenstrom und folglich die Drehzahlen einfach regeln lassen.

Bei einer weiteren Ausführungsform kann es sich anbieten, dass der Massekörper und/oder Rotationsenergieverbraucher und insbesondere der Generator beabstandet von der Rotationsenergiequelle angeordnet sind. Die beabstandete Anordnung des Massekörpers und/oder des Rotationsenergieverbrauchers hat insbesondere dann Vorteile, wenn die Rotationsenergiequelle schlecht zugänglich ist, wie es beispielsweise bei Windrädern oder Wasserrädern der Fall ist. Bei Windenergieanlagen befinden sich üblicherweise auch der Generator und, wenn vorhanden, die Getriebe in der Gondel. Bei einer Störung sind die Reparaturarbeiten sehr aufwendig. Insbesondere die Rotation des schweren Massekörpers kann zu Kräften führen, die eine starke Belastung beispielsweise des Turms einer Windenergieanlage nach sich ziehen würde. Mittels der beabstandeten Anordnung kann dies vermieden werden. Der Massekörper kann beispielsweise auf einem im Boden eingelassenen Fundament gelagert sein. Dabei bietet es sich insbesondere an, Hydraulikmaschinen zu verwenden, da sich die Hydraulikschläuche auf einfache Weise auch über längere Strecken relativ flexibel verlegen lassen, auch unterirdisch.

Nach Maßgabe einer weiteren Ausführungsform weist die Vorrichtung
- eine Lagerungseinrichtung zum drehbaren Lagern des Massekörpers auf, wobei die Lagerungseinrichtung
   ∘ ein mit dem ersten Lagerungsabschnitt zusammenwirkendes erstes Lager, und
   ∘ ein mit dem zweiten Lagerungsabschnitt zusammenwirkendes zweites Lager aufweist,
- wobei das erste Lager und/oder das zweite Lager als
- ein Gleitlager oder
- ein Magnetlager ausgebildet sind

Sowohl Gleitlager als auch Magnetlager zeichnen sich durch einen geräuscharmen Betrieb aus und sind weitgehend wartungsarm. Da Magnetlager ohne Materialkontakt arbeiten, sind sie reibungsarm, so dass in den Lagern wenig Rotationsenergie verloren geht.

In einer weitergebildeten Ausführungsform kann das Gleitlager als ein hydrodynamisches Gleitlager ausgebildet sein. Hydrodynamische Gleitlager eignen sich ebenfalls für hohe Drehzahlen. Zudem ist die Lagerung reibungsarm, so dass in den Lagern wenig Rotationsenergie verloren geht.

Eine Ausbildung der Erfindung betrifft ein Verfahren zum Speichern von Rotationsenergie mit einer Vorrichtung nach einem der vorherigen Ansprüche, umfassend die folgenden Schritte:
- Bereitstellen von zu speichernder Rotationsenergie mittels der Rotationsenergiequelle und Zuführen der Rotationsenergie zum Massekörper oder zum ersten Lagerungsabschnitt zum Speichern der Rotationsenergie, wobei das Übersetzungsverhältnis zwischen der Rotationsenergiequelle und dem Massekörper und insbesondere dem ersten Lagerungsabschnitt mittels des ersten Variators variabel eingestellt wird, und
- Abnehmen der gespeicherten Rotationsenergie aus dem Massekörper mittels des Rotationsenergieverbrauchers, wobei das Übersetzungsverhältnis zwischen dem Massekörper und insbesondere dem zweiten Lagerungsabschnitt und dem Rotationsenergieverbraucher mittels des zweiten Variators variabel eingestellt wird.

Die technischen Effekte und Vorteile, die sich mit dem vorschlagsgemäßen Verfahren erreichen lassen, entsprechen denjenigen, die für die vorliegende Vorrichtung erörtert worden sind. Zusammenfassend sei darauf hingewiesen, dass infolge der Verwendung der ersten Variators und des zweiten Variators die zu speichernde Rotationsenergie unabhängig von der Drehzahl, mit welcher die Rotationsenergieverbraucher betrieben wird, an den Massekörper weitergeleitet werden kann. Die Zufuhr von Rotationsenergie zum Massekörper bewirkt eine Erhöhung der Drehzahl des Massekörpers. Der zweite Variator kann aber unabhängig vom ersten Variator die Drehzahl des Massekörpers so wandeln, dass der Rotationsenergieverbraucher mit einer konstanten Drehzahl oder zumindest in einem vergleichsweise engen Drehzahlbereich optimal betrieben werden kann.

Bei einer weiteren Ausbildung kann das Verfahren den Schritt des Bereitstellens von elektrischer Energie mittels eines Generators umfassen. Die elektrische Energie ist diejenige Form von Energie, die im Alltag am meisten verwendet wird. Dabei wird überwiegend Wechselspannung von 230 V bei einer Frequenz von 50 Hz verwendet. Die Frequenz der Wechselspannung ändert sich aber mit der Drehzahl des verwendeten Wechselstrom-Generators. Bei einer zu starken Abweichung kann es daher zu Störungen im Stromnetz kommen. Wie erwähnt, kann aber aufgrund der Verwendung des ersten Variators und des zweiten Variators der Generator mit einer gleichbleibenden oder nahezu gleichbleibenden Drehzahl betrieben werden, so dass vom Generator ausgehende Frequenzschwankungen und damit einhergehende Störungen des Stromnetzes gering gehalten werden können.

Beispielhafte Ausführungsformen der Erfindung werden im Folgenden unter Bezugnahme auf die beigefügten Zeichnungen näher erläutert. Es zeigen
- Figur 1: eine erste Ausführungsform einer erfindungsgemäßen Vorrichtung zum Speichern von Rotationsenergie, und
- Figur 2: eine zweite Ausführungsform der erfindungsgemäßen Vorrichtung, jeweils anhand von prinzipiellen Darstellungen.

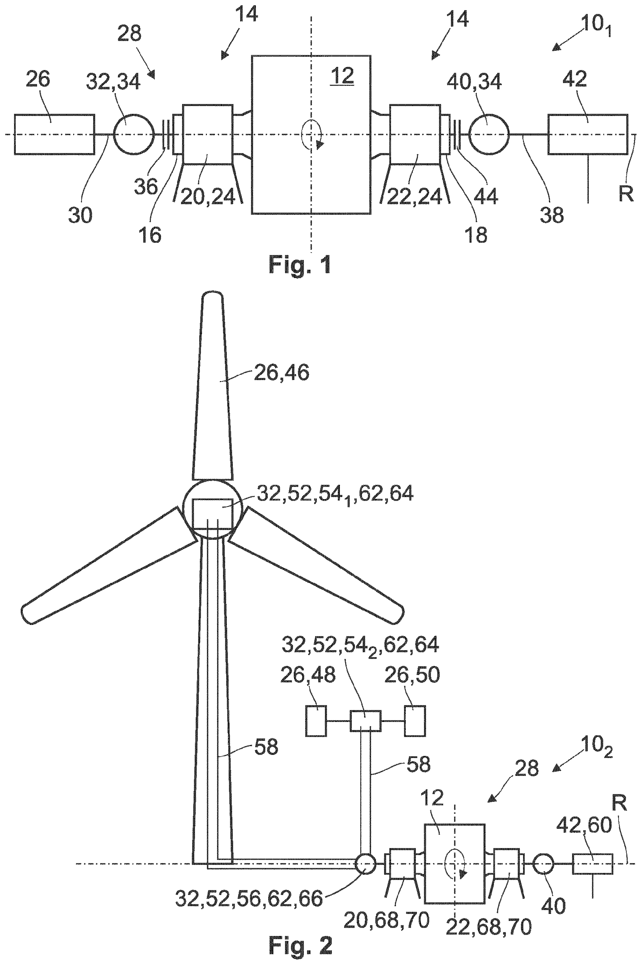

In Figur 1 ist eine erste Ausführungsform einer erfindungsgemäßen Vorrichtung 10₁ zum Speichern von Rotationsenergie anhand einer prinzipiellen Darstellung gezeigt. Die Vorrichtung 10₁ umfasst einen zylinderförmigen Massekörper 12, der mittels einer Lagerungseinrichtung 14 um eine Rotationsachse R drehbar gelagert ist. Hierzu weist der Massekörper 12 einen ersten Lagerungsabschnitt 16 und einen zweiten Lagerungsabschnitt 18 auf. Die Lagerungseinrichtung 14 umfasst ein erstes Lager 20, welches mit dem ersten Lagerungsabschnitt 16 zusammenwirkt, und ein zweites Lager 22, welches mit dem zweiten Lagerungsabschnitt 18 zusammenwirkt. In der dargestellten Ausführungsform sind das erste Lager 20 und das zweite Lager 22 als ein Magnetlager 24 ausgeführt, in denen der Massekörper 12 ohne Materialkontakt und folglich reibungs- und verlustarm gelagert ist.

Zudem umfasst die Vorrichtung 10₁ eine Rotationsenergiequelle 26, welche Energie in Form von Rotationsenergie bereitstellt. Die Rotationsenergiequelle 26 kann beispielsweise ein hier nicht dargestelltes Wasserrad oder eine ebenfalls nicht dargestellte Wasserturbine sein. Die Drehbewegung wird mittels eines Antriebsstrangs 28, der eine erste Welle 30 umfasst, an einen ersten Variator 32 übertragen, der wiederum mit dem ersten Lagerungsabschnitt 16 des Massekörpers 12 zusammenwirkt.

Es soll betont werden, dass der erste Variator 32 auch an anderen Stellen mit dem Massekörper 12 zusammenwirken kann, beispielsweise an der Stirnfläche oder der Mantelfläche. Der erste Variator 32 dient dazu, die Drehzahl der von der Rotationsenergiequelle 26 bereitgestellten Drehbewegung so zu wandeln, dass sie zur Erhöhung der Drehzahl des Massekörpers 12 verwendet werden kann. Folglich muss die Drehzahl der von der Rotationsenergiequelle 26 bereitgestellte Drehbewegung zumindest etwas höher sein als diejenige des Massekörpers 12. Nicht dargestellt sind Sensoren, mit denen die Drehzahlen des Massekörpers 12 und der Rotationsenergiequelle 26 bestimmt werden können. Ebenfalls nicht dargestellt ist eine Steuerungseinrichtung, mit welcher anhand der ermittelten Drehzahlen das Übersetzungsverhältnis des ersten Variators 32 bestimmt und eingestellt werden kann. Der erste Variator 32 kann in der ersten nicht zur Erfindung gehörigen Ausführungsform ein CVT-Getriebe 34 aufweisen, welches die Drehzahl der mittels der ersten Welle von der Rotationsenergiequelle 26 bereitgestellten Drehbewegung kontinuierlich und stufenlos ändern kann, um sie auf den Massekörper 12 zu übertragen.

Zudem kann der Antriebsstrang 28 eine erste Kupplung 36 umfassen, mit welcher der Energiefluss zwischen der Rotationsenergiequelle 26 und dem Massekörper 12 unterbrochen werden kann, beispielsweise, wenn die Rotationsenergiequelle 26 stillsteht. In der dargestellten Ausführungsform ist die erste Kupplung 36 zwischen dem ersten Variator 32 und dem Massekörper 12 angeordnet, wobei es auch denkbar wäre, die erste Kupplung 36 zwischen der Rotationsenergiequelle 26 und dem ersten Variator 32 anzuordnen. Es könnten auch noch weitere erste Kupplungen 36 in der ersten Welle 30 angeordnet werden (nicht dargestellt).

Der Antriebsstrang 28 umfasst weiterhin eine zweite Welle 38, mit welcher die vom Massekörper 12 bereitgestellte Drehbewegung an einen zweiten Variator 40 übertragen werden kann. Ferner umfasst die Vorrichtung 10₁ einen Rotationsenergieverbraucher 42, mit welchem die im Massekörper 12 gespeicherte Rotationsenergie abgenommen werden kann. Der Rotationsenergieverbraucher 42 kann beispielsweise ein Verdichter einer Industrieanlage sein, der Druckluft, komprimiertes Erdgas oder komprimierten Wasserstoff bereitstellt. Der zweite Variator 40 wandelt dabei die Drehzahl des Massekörpers 12 so um, dass der Rotationsenergieverbraucher 42 im optimalen Drehzahlbereich betrieben werden kann. Auch der zweite Variator 40 ist als ein CVT-Getriebe 34 ausgebildet.

Der Antriebsstrang 28 umfasst eine zweite Kupplung 44, mit welcher der Energiefluss zwischen dem Rotationsenergieverbraucher 42 und dem Massekörper 12 unterbrochen werden kann, beispielsweise, wenn der Rotationsenergieverbraucher 42 nicht benötigt oder gewartet wird.

Nicht dargestellt sind Sensoren, mit denen die Drehzahl des Rotationsenergieverbrauchers 42 bestimmt werden kann. Wie erwähnt, ist eine Steuerungseinrichtung, mit welcher anhand der ermittelten Drehzahlen das Übersetzungsverhältnis des ersten Variators 32 bestimmt und eingestellt werden kann, nicht dargestellt. Diese Steuerungseinrichtung kann das Übersetzungsverhältnis des zweiten Variators 40 bestimmen und diesen entsprechend ansteuern.

Insbesondere aufgrund des ersten Variators 32 und des zweiten Variators 40 kann dem Massekörper 12 Rotationsenergie zugeführt werden, sofern diese von der Rotationsenergiequelle 26 bereitgestellt wird. Unabhängig davon kann der Rotationsenergieverbraucher 42 mit der im Massekörper 12 gespeicherten Rotationsenergie im optimalen Drehzahlbereich betrieben werden, solange sich der Massekörper 12 um die Rotationsachse R dreht. Auch wenn die Rotationsenergiequelle 26 für eine bestimmte Zeit keine Rotationsenergie bereitstellen kann, kann der Rotationsenergieverbraucher 42 mittels der im Massekörper 12 gespeicherten Rotationsenergie weiterbetrieben werden.

In Figur 2 ist eine zweite Ausführungsform der erfindungsgemäßen Vorrichtung 10₂ ebenfalls anhand einer prinzipiellen Darstellung gezeigt. Der wesentliche Aufbau der Vorrichtung 10₂ der zweiten Ausführungsform entspricht dabei demjenigen der Vorrichtung 10₁ der ersten Ausführungsform, so dass im Folgenden nur auf die wichtigsten Unterschiede eingegangen wird. Aus Darstellungsgründen sind nicht alle Komponenten mit einem Bezugszeichen versehen. Diesbezüglich wird auf die Figur 1 verwiesen.

Die Vorrichtung 10₂ nach der zweiten Ausführungsform umfasst insgesamt drei Rotationsenergiequellen 26, nämlich ein Windrad 46, einen Elektromotor 48 und einen Verbrennungsmotor 50. Die Anzahl und die Art der Rotationsenergiequellen 26 können prinzipiell beliebig gewählt werden. Insbesondere ist es möglich, einen Windpark mit der erfindungsgemäßen Vorrichtung 10₂ auszurüsten.

Der erste Variator 32 der Vorrichtung 10₂ gemäß der zweiten erfindungsgemäßen Ausführungsform ist als eine Hydraulikmaschine 52 ausgebildet oder umfasst eine solche. Die Hydraulikmaschine 52 weist dabei eine erste Hydraulikpumpe 54₁ und einen Hydraulikmotor 56 auf, die mit Hydraulikleitungen 58 miteinander verbunden sind. Die erste Hydraulikpumpe 54₁ ist mit dem Windrad 46 verbunden und wird von der vom Windrad 46 bereitgestellten Rotationsenergie angetrieben. Die erste Hydraulikpumpe 54₁ setzt dabei die Rotationsenergie in hydraulische Energie um, die im Wesentlichen vom Druck und vom Volumenstrom des Hydraulikmediums bestimmt wird. Die hydraulische Energie wird im Hydraulikmotor 56 in Rotationsenergie umgesetzt, wobei die Drehzahl, mit welcher der Hydraulikmotor 56 die erste Welle 30 antreibt, so gewählt wird, dass die Drehzahl des Massekörpers 12 erhöht wird.

Der Hydraulikmotor 56 ist weiterhin mit einer zweiten Hydraulikpumpe 54₂ verbunden, die vom bereits erwähnten Elektromotor 48 und vom ebenfalls erwähnten Verbrennungsmotor 50 angetrieben wird. Der Elektromotor 48 kann als ein Solarmotor ausgebildet sein, der von der Sonnenenergie angetrieben wird. Der Verbrennungsmotor 50 kann als ein Wasserstoffmotor ausgebildet sein. Das Vorsehen eines Wasserstoffmotors kann dann sinnvoll sein, wenn beispielsweise bei einem chemischen Prozess Wasserstoff als Abfallprodukt anfällt und dessen chemische Energie ohne einen aufwendigen Transport gespeichert werden soll.

Es ist möglich, einen Solarpark mit einer Vielzahl von Solarmodulen mit der vorliegenden Vorrichtung 10₂ auszustatten.

Der Rotationsenergieverbraucher 42 ist in der zweiten Ausführungsform der Vorrichtung 10₂ als ein Generator 60 zum Bereitstellen von elektrischer Energie ausgeführt. Mit dem zweiten Variator 40 kann der Generator 60 mit einer gleichbleibenden und von der Drehzahl des Massekörpers 12 weitgehend unabhängigen Drehzahl betrieben werden, bei welcher die Frequenz des vom Generator bereitgestellten Wechselstroms derjenigen des Stromnetzes entspricht, in welches der Generator 60 die von ihm bereitgestellte elektrische Energie einspeist.

Der Generator 60 kann auch als ein Elektromotor und folglich als Rotationsenergiequelle 26 betrieben und dazu verwendet werden, die Drehzahl des Massekörpers 12 zu erhöhen. Das kann dann sinnvoll sein, wenn von anderen Energiequellen zu viel elektrische Energie in das Stromnetz eingespeist wird und dieses somit gestört werden könnte.

Wie erwähnt, umfasst der erste Variator 32 eine Hydraulikmaschine 52. Konkret kann die Hydraulikmaschine 52 als eine Axialkolbenmaschine 62 ausgebildet sein, die eine Axialkolbenpumpe 64 und einen Axialkolbenmotor 66 umfasst.

In dieser Ausführungsform sind das erste Lager 20 und das zweite Lager 22 jeweils als ein Gleitlager 68, nämlich als ein hydrodynamisches Gleitlager 70, ausgebildet, um auch in dieser Ausführungsform eine möglichst verschleiß- und reibungsarme Lagerung des Massekörpers 12 bereitzustellen.

Nicht dargestellt ist eine der zweiten Ausführungsform der Vorrichtung 10₂ ähnelnde Ausführungsform, in welcher die von der Rotationsenergiequelle 26 bereitgestellte Rotationsenergie auf mehrere Massekörper 12, die in einem Hydraulikkreislauf parallel geschaltet sein können, übertragen werden kann. Zum Verteilen der Rotationsenergie, die, wie erwähnt, als hydraulische Energie vorliegt, können Proportionalventile in den Hydraulikkreislauf integriert sein. So kann nur ein Massekörper 12 oder mehrere Massekörper 12 gleichzeitig mit der hydraulischen Energie beaufschlagt werden, wodurch sich die Drehzahl der betreffenden Massekörper 12 erhöhen lässt. Die Art und Anzahl der verwendeten Rotationsenergiequellen 26 kann beliebig gewählt werden.

### Bezugszeichenliste

- 10: Vorrichtung
- 10₁, 10₂: Vorrichtung
- 12: Massekörper
- 14: Lagerungseinrichtung
- 16: erster Lagerungsabschnitt
- 18: zweiter Lagerungsabschnitt

- 20: erstes Lager
- 22: zweites Lager
- 24: Magnetlager
- 26: Rotationsenergiequelle
- 28: Antriebsstrang

- 30: erste Welle
- 32: erster Variator
- 34: CVT-Getriebe
- 36: erste Kupplung
- 38: zweite Welle

- 40: zweiter Variator
- 42: Rotationsenergieverbraucher
- 44: zweite Kupplung
- 46: Windrad
- 48: Elektromotor

- 50: Verbrennungsmotor
- 52: Hydraulikmaschine
- 54₁: erste Hydraulikpumpe
- 54₂: zweite Hydraulikpumpe
- 56: Hydraulikmotor
- 58: Hydraulikleitung
- 60: Generator
- 62: Axialkolbenmaschine
- 64: Axialkolbenpumpe
- 66: Axialkolbenmotor
- 68: Gleitlager

- 70: hydrodynamisches Gleitlager

- R: Rotationsachse

## Patentansprüche

1. Vorrichtung (10) zum Speichern von Rotationsenergie, umfassend
- einen um eine Rotationsachse drehbar gelagerten Massekörper (12) zum Speichern von Rotationsenergie, wobei der Massekörper (12) einen ersten Lagerungsabschnitt (16) und einen zweiten Lagerungsabschnitt (18) aufweist,
- eine mit dem Massekörper (12) oder dem ersten Lagerungsabschnitt (16) zusammenwirkende Rotationsenergiequelle (26) zum Bereitstellen von zu speichernder Rotationsenergie,
- einen mit dem Massekörper (12) oder zweiten Lagerungsabschnitt (18) zusammenwirkenden Rotationsenergieverbraucher (42) zum Abnehmen der gespeicherten Rotationsenergie,
- einen zwischen der Rotationsenergiequelle (26) und dem ersten Lagerungsabschnitt (16) angeordneten ersten Variator (32) zum variablen Einstellen des Übersetzungsverhältnisses zwischen der Rotationsenergiequelle (26) und dem Massekörper (12) und insbesondere dem ersten Lagerungsabschnitt (16) und
- einen zwischen dem Massekörper (12) oder dem zweiten Lagerungsabschnitt (18) und dem Rotationsenergieverbraucher (42) angeordneten zweiten Variator (40) zum variablen Einstellen des Übersetzungsverhältnisses zwischen dem Massekörper (12) und insbesondere dem zweiten Lagerungsabschnitt (18) und dem Rotationsenergieverbraucher (42)
**dadurch gekennzeichnet, dass** der erste Variator (32) und/oder der zweite Variator (40) als eine Hydraulikmaschine (52) ausgebildet sind.

2. Vorrichtung (10) nach Anspruch 1,
**dadurch gekennzeichnet, dass** der Rotationsenergieverbraucher (42) ein Generator (60) zum Bereitstellen von elektrischer Energie ist.

3. Vorrichtung (10) nach einem der Ansprüche 1 oder 2,
**dadurch gekennzeichnet, dass** die Rotationsenergiequelle (26) ein Wasserrad oder ein Windrad (46) ist.

4. Vorrichtung (10) nach einem der vorherigen Ansprüche,
**dadurch gekennzeichnet, dass** die Rotationsenergiequelle (26) ein Elektromotor (48) oder ein Verbrennungsmotor (50) ist.

5. Vorrichtung (10) nach einem der vorherigen Ansprüche,
**dadurch gekennzeichnet, dass** die Hydraulikmaschine (52) als eine Axialkolbenmaschine (62) ausgebildet ist.

6. Vorrichtung (10) nach einem der vorherigen Ansprüche,
**dadurch gekennzeichnet, dass** die Vorrichtung (10)
- eine Lagerungseinrichtung (14) zum drehbaren Lagern des Massekörpers (12), wobei die Lagerungseinrichtung (14)
∘ ein mit dem ersten Lagerungsabschnitt (16) zusammenwirkendes erstes Lager (20), und
∘ ein mit dem zweiten Lagerungsabschnitt (18) zusammenwirkendes zweites Lager (22) aufweist,
- wobei das erste Lager (20) und/oder das zweite Lager (22) als
∘ ein Gleitlager (68) oder
∘ ein Magnetlager (24) ausgebildet sind.

7. Vorrichtung (10) nach einem der vorherigen Ansprüche,
**dadurch gekennzeichnet, dass** das Gleitlager (68) als ein hydrodynamisches Gleitlager (70) ausgebildet ist.

8. Verfahren zum Speichern von Rotationsenergie mit einer Vorrichtung (10) nach einem der vorherigen Ansprüche, umfassend die folgenden Schritte:
- Bereitstellen von zu speichernder Rotationsenergie mittels der Rotationsenergiequelle (26) und Zuführen der Rotationsenergie zum Massekörper (12) oder zum ersten Lagerungsabschnitt (16) zum Speichern der Rotationsenergie, wobei das Übersetzungsverhältnis zwischen der Rotationsenergiequelle (26) und dem Massekörper (12) und insbesondere dem ersten Lagerungsabschnitt (16) mittels des ersten Variators (32) variabel eingestellt wird,
- Abnehmen der gespeicherten Rotationsenergie aus dem Massekörper (12) mittels des Rotationsenergieverbrauchers (42), wobei das Übersetzungsverhältnis zwischen dem Massekörper (12) und insbesondere dem zweiten Lagerungsabschnitt (18) und dem Rotationsenergieverbraucher (42) mittels des zweiten Variators (40) variabel eingestellt wird.

9. Verfahren nach Anspruch 8, umfassend den Schritt des Bereitstellens von elektrischer Energie mittels eines Generators (60) .

## Claims

1. A device (10) for storing rotational energy comprising
- a mass body (12) rotatably supported about an axis of rotation for storing rotational energy, wherein the mass body (12) has a first support section (16) and a second support section (18);
- a rotational energy source (26) cooperating with the mass body (12) or the first support section (16) for providing rotational energy to be stored;
- a rotational energy consumer (42) cooperating with the mass body (12) or the second support section (18) for removing the stored rotational energy;
- a first variator (32) arranged between the rotational energy source (26) and the first support section (16) for variably setting the translation ratio between the rotational energy source (26) and the mass body (12) and in particular the first support section (16); and
- a second variator (40) arranged between the mass body (12) or the second support section (18) and the rotational energy consumer (42) for variably setting the translation ratio between the mass body (12) and in particular the second support section (18) and the rotational energy consumer (42),
**characterized in that** the first variator (32) and/or the second variator (40) is/are configured as a hydraulic machine (52).

2. A device (10) in accordance with claim 1,
**characterized in that** the rotational energy consumer (42) is generator (60) for providing electrical energy.

3. A device (10) in accordance with one of the claims 1 or 2,
**characterized in that** the rotational energy source (26) is a water wheel or a wind turbine (46).

4. A device (10) in accordance with one of the preceding claims, **characterized in that** the rotational energy source (26) is an electric motor (48) or an internal combustion engine (50).

5. A device (10) in accordance with one of the preceding claims, **characterized in that** the hydraulic machine (52) is configured as an axial piston machine (62).

6. A device (10) in accordance with one of the preceding claims, **characterized in that** the device (10) has
- a support device (14) for rotatably supporting the mass body (12), with the support device (14)
∘ having a first bearing (20) cooperating with the first support section (16); and
∘ a second bearing (22) cooperating with the second support section (18);
- with the first bearing (20) and/or the second bearing (22) being configured as
∘ a plain bearing (68); or
∘ a magnetic bearing (24).

7. A device (10) in accordance with claim 6,
**characterized in that** the plain bearing (68) is configured as a hydrodynamic plain bearing (70).

8. A method of storing rotational energy using a device (10) in accordance with one of the preceding claims, said method comprising the following steps:
- providing rotational energy to be stored by means of the rotational energy source (26) and supplying the rotational energy to the mass body (12) or to the first support section (16) for storing the rotational energy, with the translation ratio being variably set between the rotational energy source (26) and the mass body (12) and in particular the first support section (16) by means of the first variator (32);
- drawing the stored rotational energy from the mass body (12) by means of the rotational energy consumer (42), with the translation ratio being variably set between the mass body (12) and in particular the second support section (18) and the rotational energy consumer (42) by means of the second variator (40).

9. A method in accordance with claim 8, comprising the step of providing electrical energy by means of a generator (60).

## Revendications

1. Dispositif (10) de stockage d'énergie de rotation, comprenant
- un corps de masse (12) monté rotatif sur un axe de rotation pour le stockage d'énergie de rotation, le corps de masse (12) présentant une première partie d'appui (16) et une seconde partie d'appui (18),
- une source d'énergie de rotation (26) coopérant avec le corps de masse (12) ou la première partie d'appui (16) pour fournir de l'énergie de rotation à stocker,
- un consommateur d'énergie de rotation (42) coopérant avec le corps de masse (12) ou la seconde partie d'appui (18) pour prélever l'énergie de rotation stockée,
- un premier engrenage à vitesse variable (32) agencé entre la source d'énergie de rotation (26) et la première partie d'appui (16) pour le réglage variable du rapport de transmission entre la source d'énergie de rotation (26) et le corps de masse (12) et en particulier la première partie d'appui (16) et
- un second engrenage à vitesse variable (40) agencé entre le corps de masse (12) ou la seconde partie d'appui (18) et le consommateur d'énergie de rotation (42) pour le réglage variable du rapport de transmission entre le corps de masse (12) et en particulier la seconde partie d'appui (18) et le consommateur d'énergie de rotation (42)
**caractérisé en ce que** le premier engrenage à vitesse variable (32) et/ou le second engrenage à vitesse variable (40) sont réalisés sous la forme d'une machine hydraulique (52).

2. Dispositif (10) selon la revendication 1,
**caractérisé en ce que** le consommateur d'énergie de rotation (42) est un générateur (60) destiné à fournir de l'énergie électrique.

3. Dispositif (10) selon l'une des revendications 1 ou 2,
**caractérisé en ce que** la source d'énergie de rotation (26) est une roue hydraulique ou une roue éolienne (46).

4. Dispositif (10) selon l'une des revendications précédentes,
**caractérisé en ce que** la source d'énergie de rotation (26) est un moteur électrique (48) ou un moteur à combustion interne (50).

5. Dispositif (10) selon l'une des revendications précédentes,
**caractérisé en ce que** la machine hydraulique (52) est réalisée sous la forme d'une machine à pistons axiaux (62).

6. Dispositif (10) selon l'une des revendications précédentes,
**caractérisé en ce que** le dispositif (10) présente
- un système d'appui (14) pour le montage rotatif du corps de masse (12), le système d'appui (14) présentant
∘ un premier palier (20) coopérant avec la première partie d'appui (16) et
∘ un second palier (22) coopérant avec la seconde partie d'appui (18),
- le premier palier (20) et/ou le second palier (22) étant réalisés sous la forme
∘ d'un palier lisse (68) ou
∘ d'un palier magnétique (24).

7. Dispositif (10) selon la revendication 6,
**caractérisé en ce que** le palier lisse (68) est réalisé sous la forme d'un palier lisse hydrodynamique (70).

8. Procédé de stockage d'énergie de rotation comportant un dispositif (10) selon l'une des revendications précédentes, comprenant les étapes suivantes consistant à :
- fournir de l'énergie de rotation à stocker au moyen de la source d'énergie de rotation (26) et alimenter le corps de masse (12) ou la première partie d'appui (16) en énergie de rotation pour stocker l'énergie de rotation, le rapport de transmission entre la source d'énergie de rotation (26) et le corps de masse (12) et en particulier la première partie d'appui (16) étant réglé de manière variable au moyen du premier engrenage à vitesse variable (32),
- prélever du corps de masse (12) l'énergie de rotation stockée, au moyen du consommateur d'énergie de rotation (42), le rapport de transmission entre le corps de masse (12) et en particulier la seconde partie d'appui (18) et le consommateur d'énergie de rotation (42) étant réglé de manière variable au moyen du second engrenage à vitesse variable (40).

9. Procédé selon la revendication 8, comprenant l'étape consistant à fournir de l'énergie électrique au moyen d'un générateur (60).
